# EUROPÄISCHE PATENTANMELDUNG

(11) **EP 0 924 511 A2**
(43) Veröffentlichungstag der Anmeldung: **23.06.1999**
(21) Anmeldenummer: 98123126.9
(22) Anmeldetag: 04.12.1998
(51) Int. Cl.: G01N 27/04

(54) **Vorrichtung zum Prüfen bzw. Messen des Feuchtigkeitsgehaltes**

(30) Priorität: 19.12.1997 DE 29722546 U
(71) Anmelder: Kulp, Steffen, 99867 Gotha (DE)
(72) Erfinder: Kulp, Steffen, 99867 Gotha (DE)
(74) Vertreter: Späth, Volker

(57) **Zusammenfassung**

Die Erfindung betrifft eine Vorrichtung zum Prüfen bzw. Messen des Feuchtigkeitsgehaltes von Bauelementen der Bauindustrie wie Estrich- und Betonböden, Wände, Betonfertigteile usw. Hierzu sind in ein- bzw. mehrschichtig verfestigten Elementen der Bauindustrie wie Estrich- und Betonfußböden in einer Schicht (1) ein oder mehrere Abstandhalter (3) aus den elektrischen Strom nicht leitendem Material mit darin befestigten Elektroden (2) auf einer Sperrschicht (4) aufsitzend angeordnet. Die Elektroden (2), vorteilhaft schlag- bzw. bruchempfindliche Stahl stifte mit Sollbruchstellen, sind im gesamten Bereich der Schicht (1) mit einer Isolierung (6) aus Isolierlack oder einem Isolierschlauch versehen. Sie sind durch die Sperrschicht (4) hindurchgeführt und auf dem Grund der Schicht (5) mit dem Abstandhalter (3) aufsitzend angeordnet. Die Elektroden (2) ragen aus der Schicht (1) heraus. Hieran können verschiedene elektrische bzw. elektronische Prüf- bzw. Meßgeräte vorteilhaft Widerstandsmeßgeräte geschaltet sein. Nach dem Meß- bzw. Prüfvorgang werden die herausragenden Enden der Elektroden (2) mechanisch entfernt.

## Beschreibung

Die Erfindung betrifft eine Vorrichtung zum Prüfen bzw. Messen des Feuchtigkeitsgehaltes von Bauelementen der Bauindustrie wie Estrich- und Betonböden, Wände, Betonfertigteile usw.

In vielen technologischen Bereichen zum Beispiel auch in der Bauindustrie muß heute der Feuchtigkeitsgehalt von Stoffen bestimmt werden, um Schlüsse über den Zustand auch für die Weiterverarbeitung ziehen zu können.
So sind einige Vorrichtungen zur Messung der Feuchte in verschiedenen Substanzen mittels Mikrowellentechnik bekannt.
In der Offenlegungschrift DE 39 41 032 A1 wird ein Verfahren zum Messen des Wassergehaltes in beliebiger Materie beschrieben, nachdem im geprüften Material durch die Fortpflanzung eines elektromagnetischen Signals entlang einer offenen elektromagnetischen Meßleitung ein elektromagnetisches Feld erzeugt wird und die Änderung der Phasengeschwindigkeit der Fortpflanzung dieses elektromagnetischen Signals entlang der offenen elektromagnetischen Masseleitung gemessen wird, die durch Wechselwirkung des elektromagnetischen Feldes mit dem geprüften Material verursacht wird. Zur Realisierung dieses Verfahrens ist eine umfangreiche mechanische und elektronische Ausrüstung erforderlich.
Aus der Offenlegungsschrift DE 37 16 846 A1 ist weiterhin ein Verfahren zur Überwachung von Gebieten, insbesondere Mülldeponien, Dämmen, Deichen oder dergleichen bekannt, nach dem erfindungsgemäß Eigenpotentialmessungen an der Oberfläche des Gebietes durch mehrere Basissonden und eine Vielzahl von Potentialsonden vorgenommen werden. Durch gleichzeitige Messungen läßt sich besonders der zeitliche Ablauf des Eigenpotentials bestimmen. Die Ermittlung der Eigenpotentiale wird nach unterschiedlichen Zeitspannen wie zwei Stunden oder mehreren Jahren vorgenommen. Die Sonden werden in unterschiedlichen Tiefen in einem Raster aufgestellt.
Ebenfalls ist nach der Offenlegungsschrift DE 36 37 512 A1 eine Elektrode zur Erfassung von Meßwerten in Werkstoffen beispielsweise von Feuchtigkeit in abgebundenen Stoffen wie Mörtel, Zement, Stein usw. bekannt, die mit einem Kontakt kopf versehen ist, der in seiner radialen Ausdehnung veränderbar ist. Dieser besteht aus einer mit leitenden Kontakthaaren versehenen Kontaktbürste. Dabei erstrecken sich die Kontakthaare über den Durchmesser hinaus, so daß sie beim Einschieben in ein Bohrloch an dessen Wänden entlanggleiten und eine sichere Kontaktgabe gewährleistet ist. Eine andere Ausführung verwendet eine von einer Gummihülle umgebene Spreizvorrichtung. Die Länge der Elektroden ist entsprechend der Tiefe des Bohrloches variierbar. Die Elektrode ist weiterhin mit einer Tiefenmeßvorrichtung versehen.
Die Anwendung dieser Vorrichtung ist mit einigen Nachteilen verbunden. So müssen insbesondere in festes Prüfmaterial wie bereits abgebundener Estrich- oder Betonfußboden, Mauerwerk usw. Bohrlöcher eingetrieben werden. Infolge Wärmeentwicklung an diesen Stellen entstehen durch Austrocknung verfälschte Meßergebnisse. Auch besteht die Gefahr, daß beim Setzen der Bohrlöcher verdeckte Installationen wie Fußbodenheizungen, elektrische Leitungen usw. zerstört werden können.
Nach der Offenlegungsschrift DE 32 12 625 A1 ist weiterhin eine Vorrichtung zum Prüfen bzw. Messen des Feuchtigkeitsgehaltes von Materialien und Stoffen wie Erde, Mörtelmasse, Mauerwerke usw. bekannt, bei der zur exakten und schnellen Feststellung von Feuchtigkeitswerten zwei im Abstand voneinander mit den Materialien bzw. Stoffen kontaktierende stiftförmige Elektroden mit Stechspitzen vorgesehen sind, die über eine Stromquelle mit einer elektronischen Auswertung und einem nachgeschalteten Anzeigeelement verbunden sind. Die Geräte gibt es als tragbare und stationäre Ausführungen. Diese Vorrichtungen sind nur für lockeres Prüfgut wie Pulver, Erde usw. einsetzbar. Bei der Verwendung für festes oder bereits abgebundenes Prüfgut wie Estrich- oder Betonfußboden sind diese Vorrichtungen nicht einsetzbar, ohne vorher Meßbohrungen setzen zu müssen. Infolge der hierbei entstehenden Wärmeentwicklung entsteht Austrocknung im Bohrlochbereich, wodurch beim Meßvorgang keine exakten Meßergebnisse entstehen können.
Auch besteht die Gefahr der Beschädigung verdeckt liegender Installationen.

Aufgabe der Erfindung ist die Schaffung einer weiteren Vorrichtung, mit der eine exakte, schnelle und kostengünstige Feststellung des Feuchtigkeitsgehaltes verschiedener verfestigter, d.h. bereits abgebundener Materialien der Bauindustrie zerstörungsfrei und beliebig oft unter gleichen Bedingungen wiederholbar ist.

Erfindungsgemäß sind in einem ein- bzw. mehrschichtig verfestigten Element der Bauindustrie in einer Schicht ein oder mehrere Abstandhalter mit darin befestigten Elektroden auf einer Sperrschicht aufsitzend angeordnet. Bei einer weiteren Ausführung sind die Elektroden im gesamten Bereich der Schicht mit einer Isolierung versehen, durch die Sperrschicht hindurchgeführt und auf dem Grund der zweiten Schicht mit dem Abstandhalter aufsitzend angeordnet. Die Elektroden ragen aus der Schicht heraus. Die Isolierung ist ein Isolierlack oder ein Kunststoffschlauch. Die Elektroden sind schlag- bzw. bruchempfindlich. Sie sind mit Sollbruchstellen versehen.

Die Erfindung ermöglicht kostengünstig und zerstörungsfrei die Prüfung und Messung des Feuchtigkeitsgehaltes in verfestigten auch mehrschichtigen Bauelementen der Bauindustrie in waagerechter und senkrechter Anordnung. Der Prüf- bzw. Meßvorgang liefert gegenüber bekannten Vorrichtungen und Verfahren genauere Ergebnisse.

Die Erfindung soll nachstehend an einem Ausführungsbeispiel näher erläutert werden.
In der zugehörigen Zeichnung zeigen
Fig. 1: eine Schnittdarstellung der Erfindung,
Fig. 2: eine weitere Ausführung der Erfindung im Schnitt.

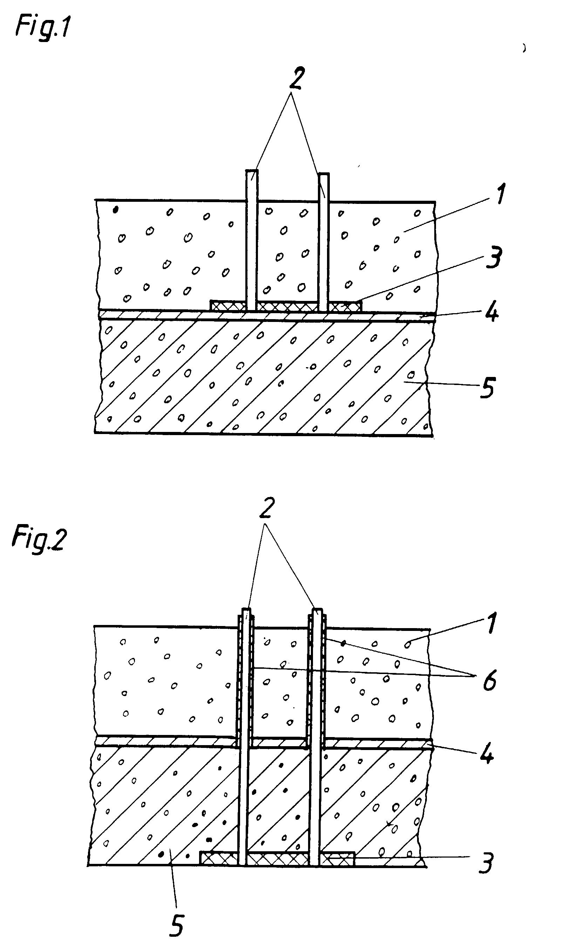

In einem Bauelement der Bauindustrie beispielsweise einem Fußboden, bestehend aus einer oder mehreren Schichten 1; 5 wie Estrich, einer Sperrschicht 4 und einer Rohdecke aus Beton sind vorteilhaft auf einer für die Prüfung bzw. Messung der Feuchtigkeit repräsentativen Fläche der Estrich- oder Betonschicht Abstandhalter 3 mit darin befestigten Elektroden 2 nach Fig. 1 auf der Sperrschicht 4 stehend angeordnet. Der Abstandhalter 3 besteht aus den elektrischen Strom nichtleitendem Material wie Kunststoff. Die Elektroden 2 sind vorteilhaft Stahlstifte von ca. 5 bis 6 mm Durchmesser geringer Bruchfestigkeit oder sind mit Sollbruchstellen versehen.
Ihr Abstand zueinander im Abstandhalter 3, vorteilhaft einer Kunststoffplatte, kann je nach Anforderung an das Prüf- bzw. Meßergebnis unterschiedlich sein. Er beträgt z.B. 100 mm.
Die Länge der Elektroden 2 ist so bemessen, daß diese etwas aus der Estrich- oder Betonschicht herausragen.
In einer weiteren Ausführung nach Fig. 2 sind die Abstandhalter 3 auf den Grund der auf Feuchtigkeitsgehalt zu prüfenden bzw. zu messenden Schicht 5, die eine Betonschicht sein kann, gesetzt. Die Elektroden 2 sind hierbei durch die Sperrschicht 4 und die Schicht 1, einer Estrichschicht, geführt und ragen aus dieser einige mm heraus. Im Bereich der für die Prüfung bzw. Messung uninteressanten Schicht 1 sind die Elektroden 2 mit einer Isolierung 6 versehen, die aus Überzügen des den elektrischen Strom nichtleitenden Materials wie Kunststoff, Isolierlack, Kunststoffschlauch usw. besteht. An die aus der Schicht 1 herausragenden Enden der Elektroden 2 können verschiedene elektrische bzw. elektronische Prüf- und Meßgeräte zur Bestimmung der Feuchtigkeit vorteilhaft Geräte zur Messung der elektrischen Widerstandswerte in den betreffenden Bereichen geschaltet werden. Dieser Vorgang ist nach Bedarf beliebig oft, auch nach längerer Zeit, wiederholbar. Nach Abschluß des Prüf- bzw. Meßverfahrens werden die aus der Schicht 1 herausragenden Enden der Elektroden 2 mechanisch gekürzt, z.B. durch Abschlagen usw.
Die restlichen Teile der Vorrichtung verbleiben im Fußboden. Die erfindungsgemäße Vorrichtung ist weiterhin auch zur Prüfung und Messung der Feuchtigkeit anderer Bauelemente der Bauindustrie wie Wände, Fertigteile, Platten usw. einsetzbar.
In jedem Fall müssen die Abstandhalter 3 mit den Elektroden 2 vor Verfestigung, d.h. vor dem Abbinden des Baumaterials wie Estrich, Beton od. dgl., entsprechend platziert werden. Selbstverständlich können Ausführungen der Erfindung nach Fig. 1 und Fig. 2 gemeinsam in einem Fußboden mit den Schichten 1; 5 und der Sperrschicht 4 zur Anwendung kommen.
Die Erfindung ermöglicht kostengünstig und zerstörungsfrei die Prüfung und Messung des Feuchtigkeitsgehaltes in verfestigten auch mehrschichtigen Bauelementen der Bauindustrie in waagerechter und senkrechter Anordnung. Der Prüf- bzw. Meßvorgang liefert gegenüber bekannten Vorrichtungen und Verfahren genauere Ergebnisse, da eine exakte Anlage und Kontaktgabe des Prüfmaterials an den Elektroden 2 an ihren gesamten Flächen gewährleistet ist und keine verfälschende Beeinträchtigung der Dichte und des Feuchtigkeitsgehaltes durch partielle Austrocknung entsteht, da keine Bohrungen und andersweitige Materialabtragungen erforderlich sind.

## Patentansprüche

1. Vorrichtung zum Prüfen bzw. Messen des Feuchtigkeitsgehaltes von verfestigten Materialien und Stoffen, bei der mindestens zwei in einem bestimmten Abstand zueinander angeordnete Elektroden mit dem Material bzw. Stoff kontaktiert und mit einer elektrischen bzw. elektronischen Auswertvorrichtung verbunden sind, dadurch gekennzeichnet, daß in einem ein- bzw. mehrschichtig verfestigten Element der Bauindustrie in einer Schicht (1) ein oder mehrere Abstandhalter (3) mit darin befestigten Elektroden (2) auf einer Sperrschicht (4) aufsitzend angeordnet sind.

2. Vorrichtung nach Anspruch 1, dadurch gekennzeichnet, daß die Elektroden (2) im gesamtem Bereich der Schicht (1) mit einer Isolierung (6) versehen sind, durch die Sperrschicht (4) hindurchgeführt und auf den Grund der Schicht (5) mit dem Abstandhalter (3) aufsitzend angeordnet sind.

3. Vorrichtung nach Anspruch 1 bis 2, dadurch gekennzeichnet, daß die Elektroden (2) aus der Schicht (1) herausragen.

4. Vorrichtung nach Anspruch 2, dadurch gekennzeichnet, daß die Isolierung (6) ein Isolierlack ist.

5. Vorrichtung nach Anspruch 2, dadurch gekennzeichnet, daß die Isolierung (6) ein Kunststoffschlauch ist.

6. Vorrichtung nach Anspruch 1 bis 4 dadurch gekennzeichnet, daß die Elektroden (2) schlag- bzw. bruchempfindlich sind.

7. Vorrichtung nach Anspruch 1 bis 5 dadurch gekennzeichnet, daß die Elektroden (2) mit Sollbruchstellen versehen sind.
